# EUROPEAN PATENT SPECIFICATION

(11) **EP 3 275 843 B1**
(45) Date of publication and mention of the grant of the patent: **16.09.2020**
(21) Application number: 17174419.6
(22) Date of filing: 05.06.2017
(51) Int. Cl.: C02F 1/66, E03B 3/28, C02F 1/44, C02F 1/48, C02F 1/461, C02F 1/32, C02F 1/28

(54) **WATER QUALITY OPTIMIZATION SYSTEM**
WASSERQUALITÄTOPTIMIERUNGSSYSTEM
SYSTÈME D'OPTIMISATION DE LA QUALITÉ DE L'EAU

(30) Priority: 26.07.2016 CN 201620795567 U
(43) Date of publication of application: 31.01.2018
(73) Proprietor: Ng, Tat Yung, North Point (HK)
(72) Inventor: Ng, Tat Yung, North Point (HK)
(74) Representative: Cabinet Chaillot

(56) References cited:
- EP-A1- 3 275 520
- CN-A- 106 045 159
- JP-A- 2001 327 996
- JP-A- 2010 172 806
- US-A1- 2003 205 535
- US-A1- 2011 048 039

## Description

### BACKGROUND OF THE INVENTION

### Technical Field

This invention relates to water treatment equipment, in particular to a water quality optimization system.

### 2. Description of Related Art

Existing fresh water resources which can be easily utilized by humans are mainly from rivers, lakes and shallow groundwater; fresh water resources are deficient due to large consumption, and clean water resources in places with abundant electricity and energy are also relatively deficient and need to be saved and protected due to serious pollution and extremely imbalanced regional distribution; water resources have already been precious resources for humans, and water resource problems have even become a major strategy concerning sustainable development of the national economy and society, and lasting political stability.

In certain remote arid and distressed areas where clean water resources are extremely difficult to obtain and water resource shortages exist, it is hard to lay long delivery pipelines for long-distance supply of drinking water, or to transport drinking water back and forth through transportation facilities without considering transportation costs, or to mount large water quality optimization systems, and consequentially, the cost of safe drinking water becomes extremely high; besides the high drinking water cost, water quality changes or secondary pollution can be caused by long-distance delivery or transportation, and consequentially, water cannot be directly drunk by people safely.

Although the personal demand for drinking water of people in daily life is not large, the requirements for the sanitation, cleanliness, sterility and non-toxicity of the drinking water are high; drinkable pure water can be obtained through air purification and condensation, however, the pure water obtained simply through air purification and condensation still cannot reach the standard of high-quality drinking water.
US 2003/205535 A1, US 2011/048039 A1, JP 2001 327996 A and JP 2010 172806 A each disclose a water quality optimization system according to the preamble of claim 1.

### BRIEF SUMMARY OF THE INVENTION

For solving the technical problems, the invention provides a water quality optimization system which can further optimize pure water obtained through air purification and condensation to make the pure water reach the standard of high-quality drinking water.

According to the technical scheme adopted by the invention for solving the technical problems, the water quality optimization system comprises a water pump, a water purification device, a water storage device, a controller, a power source and a pH value regulation device, wherein an inlet of the water pump is connected with a water source, an outlet of the water pump is connected with the pH value regulation device; the pH value regulation device is connected with the water storage device through the water purification device, and the water storage device is connected with a system outlet and further connected with the inlet of the water pump through valves; the water storage device comprises a pH value detector, the signal output end of the pH value detector is connected with the controller, and the control ends of the valves and the control end of a water pump driving circuit are all connected with the controller, the water quality optimization system being characterized in that the water storage device further comprises a plurality of water receivers and the pH value regulation device is configured so as to electrolyze and balance the water into acid water or alkaline water by an electrolysis method according to the pH value of the water with no additives, the pH value of the water being monitored through the pH value detector in the water storage device and, if it is found that the pH value of the water in a certain water receiver does not meet the standard, the controller starts the water pump and opens the corresponding valve, pure water in the water receiver not meeting the pH value standard is circulated, and thus the pure water can be balanced.

Preferably, the valves are electromagnetic valves, and the water receivers are connected with the inlet of the water pump through the corresponding electromagnetic valves respectively.

Preferably, the water purification device comprises a filter, a water electrolysis device, a reverse osmosis (RO) device, an RO rear active carbon filter device and an ultraviolet sterilization device.

Preferably, the filter, the water electrolysis device, the reverse osmosis (RO) device, the RO rear active carbon filter device and the ultraviolet sterilization device are sequentially connected in series, the filter is connected with the pH value regulation device, and the ultraviolet sterilization device is connected with the water storage device.

Preferably, the water quality optimization system further comprises a water magnetization device, and the water storage device is connected with the system outlet through the water magnetization device.

Preferably, the power source is a solar power source.

The water quality optimization system of the invention can further optimize pure water obtained through air purification and condensation to make the pure water reach the standard of high-quality drinking water.

### BRIEF DESCRIPTION OF THE SEVERAL VIEWS OF THE DRAWINGS

A further detailed description of the invention is given with the accompanying drawing and the specific execution mode as follows.

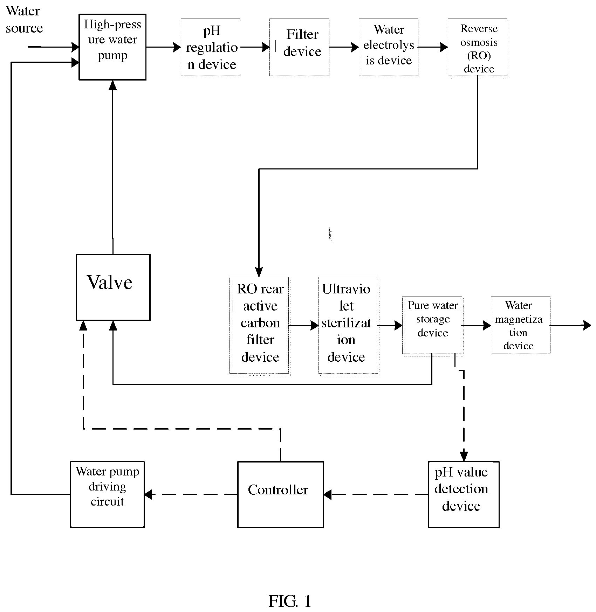

FIG. 1 is a system chart of a water quality optimization system of an embodiment of the invention.

### DETAILED DESCRIPTION OF THE INVENTION

As is shown in FIG. 1, a water quality optimization system of the invention comprises a high-pressure water pump, a water purification device, a water storage device, a controller, a solar power source, a pH value regulation device and a water magnetization device.

The water purification device comprises a filter, a water electrolysis device, a reverse osmosis (RO) device, an RO rear active carbon filter device and an ultraviolet sterilization device.

The filter, the water electrolysis device, the reverse osmosis (RO) device, the RO rear active carbon filter device and the ultraviolet sterilization device are sequentially connected in series, the filter is connected with the pH value regulation device, and the ultraviolet sterilization device is connected with the water storage device.

An inlet of the high-pressure water pump is connected with a pure water source, an outlet of the high-pressure water pump is connected with the pH value regulation device, the pH value regulation device is connected with the water storage device through the water purification device, and the water storage device is connected with a system outlet through the water magnetization device and further connected with the inlet of the high-pressure pump through valves; the water storage device comprises a pH value detector, the signal output end of the pH value detector is connected with the controller, and the control ends of the valves and the control end of a high-pressure water pump driving circuit are all connected with the controller.

The valves are electromagnetic valves, and the water storage device comprises a plurality of water receivers. The water receivers are connected with the inlet of the high-pressure water pump through the corresponding electromagnetic valves respectively.

According to the invention, the pH value of pure water provided by the water source is detected and then balanced and regulated, no additive is added during the balancing and regulating process, the water is electrolyzed and balanced into acid water or alkaline water by an electrolysis method according to the pH value of the water, and the system can further regulate the pure water into alkalescent water for drinking and make the water reach the standard of optimal drinking water.

Certain impurities can be generated after the pH value of the pure water is balanced and need to be isolated and removed through the filter device, the pure water then enters a water softening device of the water electrolysis device and is changed into soft water by reducing the hardness of the water to 70 mg/l or below according to the ion exchange principle, namely by exchanging Mg²⁺Ca²⁺ with Na⁺, and thus the pure water is optimized.

The optimized pure water is comprehensively filtered (such as impurities and heavy metal) and sterilized through the reverse osmosis (RO) device and enters the water storage device after passing through the active carbon filter device and the stainless steel high-energy ultraviolet sterilization device.

The water storage device starts a circulating device to activate the pure water according to the pH value and storage time of water in each water tank, and the specific process is as follows: the pH value is monitored through the pH value detector in the water storage device, if it is found that the pH value of water in a certain pure water tank does not meet the standard, an alarm can be given to the controller of the system and be synchronized into a master monitoring system of a central control room, the controller starts the high-pressure water pump and opens the corresponding electromagnetic valve, pure water in the water tank not meeting the pH value standard is circulated, and thus the pure water can be balanced circularly. Meanwhile, the storage time of water in each tank is recorded and stored in the controller and a master control system of the central control room, if the pure water in a certain water tank is not utilized in a set period of time, the master control system of the central control room can give out a command to the circulating system, and the pure water in the tank is activated circularly.

Finally, the water storage device supplies water to the magnetization device according to the production requirement, and then the water is supplied to an automatic bottled water production system to be bottled and packaged.

## Claims

1. A water quality optimization system to optimize the quality of pure water obtained through air purification and condensation, the water quality optimization system comprising a water pump, a water purification device, a water storage device, a controller and a power source, and further comprising a pH value regulation device, wherein an inlet of the water pump is connected with a water source, and an outlet of the water pump is connected with the pH value regulation device; the pH value regulation device is connected with the water storage device through the water purification device, and the water storage device is connected with a system outlet and further connected with the inlet of the water pump through valves; the water storage device comprises a pH value detector, the signal outlet end of the pH value detector is connected with the controller, and the control ends of the valves and the control end of a water pump driving circuit are all connected with the controller, the water quality optimization system being **characterized in that** the water storage device further comprises a plurality of water receivers and the pH value regulation device is configured so as to electrolyze and balance the water into acid water or alkaline water by an electrolysis method according to the pH value of the water with no additives, the pH value of the water being monitored through the pH value detector in the water storage device and, if it is found that the pH value of the water in a certain water receiver does not meet the standard, the controller starts the water pump and opens the corresponding valve, pure water in the water receiver not meeting the pH value standard is circulated, and thus the pure water can be balanced circularly.

2. The water quality optimization system according to Claim 1, **characterized in that** the valves are electromagnetic valves, the water receivers being connected with the inlet of the water pump through the corresponding electromagnetic valves respectively.

3. The water quality optimization system according to Claim 1, **characterized in that** the water purification device comprises a filter, a water electrolysis device, a reverse osmosis (RO) device, an RO rear active carbon filter device and an ultraviolet sterilization device.

4. The water quality optimization system according to Claim 3, **characterized in that** the filter, the water electrolysis device, the reverse osmosis (RO) device, the RO rear active carbon filter device and the ultraviolet sterilization device are sequentially connected in series, the filter is connected with the pH value regulation device, and the ultraviolet sterilization device is connected with the water storage device.

5. The water quality optimization system according to Claim 1, **characterized by** further comprising a water magnetization device, wherein the water storage device is connected with the system outlet through the water magnetization device.

6. The water quality optimization system according to Claim 1, **characterized in that** the power source is a solar power source.

## Patentansprüche

1. Wasserqualitätsoptimierungssystem zum Optimieren der Qualität von Reinwasser, das durch Luftreinigung und Kondensation erhalten wird, wobei das Wasserqualitätsoptimierungssystem eine Wasserpumpe, eine Wasserreinigungsvorrichtung, eine Wasserspeichervorrichtung, eine Steuerung und eine Leistungsquelle umfasst und ferner eine pH-Wert-Regelungsvorrichtung umfasst, wobei ein Einlass der Wasserpumpe mit einer Wasserquelle verbunden ist, und ein Auslass der Wasserpumpte mit der pH-Wert-Regelungsvorrichtung verbunden ist, wobei die pH-Wert-Regelungsvorrichtung durch die Wasserreinigungsvorrichtung mit der Wasserspeichervorrichtung verbunden ist, und die Wasserspeichervorrichtung mit einem Systemauslass verbunden ist und ferner durch Ventile mit dem Einlass der Wasserpumpe verbunden ist, wobei die Wasserspeichervorrichtung einen pH-Wert-Detektor umfasst, das Signalauslassende des pH-Wert-Detektors mit der Steuerung verbunden ist, und die Steuer-Enden der Ventile und das Steuer-Ende einer Wasserpumpentreiberschaltung allesamt mit der Steuerung verbunden sind, wobei das Wasserqualitätsoptimierungssystem **dadurch gekennzeichnet ist, dass** die Wasserspeichervorrichtung ferner eine Mehrzahl von Wasseraufnahmeeinrichtungen umfasst, und die pH-Wert-Regelungsvorrichtung zum Elektrolysieren und Ausbalancieren des Wassers in saures Wasser oder alkalisches Wasser durch ein Elektrolyseverfahren gemäß dem pH-Wert des Wassers ohne Zusatzstoffe konfiguriert ist, der pH-Wert des Wassers durch den pH-Wert-Detektor in der Wasserspeichervorrichtung überwacht wird, und die Steuerung, wenn festgestellt wird, dass der pH-Wert des Wasser in einer bestimmten Wasseraufnahmeeinrichtung den Standard nicht erfüllt, die Wasserpumpe startet und das entsprechende Ventil öffnet, wobei Reinwasser in der Wasseraufnahmeeinrichtung, das den pH-Wert-Standard nicht erfüllt, umlaufen gelassen wird und das Reinwasser demnach umlaufend ausbalanciert werden kann.

2. Wasserqualitätsoptimierungssystem nach Anspruch 1, **dadurch gekennzeichnet, dass** die Ventile elektromagnetische Ventile sind, und die Wasseraufnahmeeinrichtungen jeweils durch die entsprechenden elektromagnetischen Ventile mit dem Einlass der Wasserpumpe verbunden sind.

3. Wasserqualitätsoptimierungssystem nach Anspruch 1, **dadurch gekennzeichnet, dass** die Wasserreinigungsvorrichtung ein Filter, eine Wasserelektrolysevorrichtung, eine Umkehrosmose-(RO-)Vorrichtung, eine hintere RO-Aktivkohlefiltervorrichtung und eine Ultraviolett-Sterilisationsvorrichtung umfasst.

4. Wasserqualitätsoptimierungssystem nach Anspruch 3, **dadurch gekennzeichnet, dass** das Filter, die Wasserelektrolysevorrichtung, die Umkehrosmose-(RO-)Vorrichtung, die hintere RO-Aktivkohlefiltervorrichtung und die Ultraviolett-Sterilisationsvorrichtung nacheinander in Reihe geschaltet sind, wobei das Filter mit der pH-Wert-Regelungsvorrichtung verbunden ist, und die Ultraviolett-Sterilisationsvorrichtung mit der Wasserspeichervorrichtung verbunden ist.

5. Wasserqualitätsoptimierungssystem nach Anspruch 1, **dadurch gekennzeichnet, dass** es ferner eine Wassermagnetisierungsvorrichtung umfasst, wobei die Wasserspeichervorrichtung durch die Wassermagnetisierungsvorrichtung mit dem Systemauslass verbunden ist.

6. Wasserqualitätsoptimierungssystem nach Anspruch 1, **dadurch gekennzeichnet, dass** die Leistungsquelle eine Sonnenenergiequelle ist.

## Revendications

1. Système d'optimisation de qualité d'eau pour optimiser la qualité d'une eau pure obtenue par condensation et purification d'air, le système d'optimisation de qualité d'eau comprenant une pompe à eau, un dispositif de purification d'eau, un dispositif de stockage d'eau, un dispositif de commande et une source d'alimentation, et comprenant en outre un dispositif de régulation de valeur de pH, une entrée de la pompe à eau étant reliée à une source d'eau, et une sortie de la pompe à eau étant reliée au dispositif de régulation de valeur de pH ; le dispositif de régulation de valeur de pH étant relié au dispositif de stockage d'eau par l'intermédiaire du dispositif de purification d'eau, et le dispositif de stockage d'eau étant relié à une sortie du système et en outre relié à l'entrée de la pompe à eau par l'intermédiaire de vannes ; le dispositif de stockage d'eau comprenant un détecteur de valeur de pH, l'extrémité de sortie de signal du détecteur de valeur de pH étant reliée au dispositif de commande, et les extrémités de commande des vannes et l'extrémité de commande d'un circuit de pilotage de pompe à eau étant toutes reliées au dispositif de commande, le système d'optimisation de qualité d'eau étant **caractérisé par le fait que** le dispositif de stockage d'eau comprend en outre une pluralité d'éléments de réception d'eau et le dispositif de régulation de valeur de pH est configuré de façon à électrolyser et équilibrer l'eau en eau acide ou en eau alcaline par un procédé d'électrolyse selon la valeur de pH de l'eau sans aucun additif, la valeur de pH de l'eau étant surveillée par l'intermédiaire du détecteur de valeur de pH dans le dispositif de stockage d'eau et, s'il s'avère que la valeur de pH de l'eau dans un certain élément de réception d'eau ne satisfait pas la norme, le dispositif de commande démarre la pompe à eau et ouvre la vanne correspondante, de l'eau pure dans l'élément de réception d'eau ne satisfaisant pas à la norme de valeur de pH est mise en circulation et, de ce fait, l'eau pure peut être équilibrée de manière circulaire.

2. Système d'optimisation de qualité d'eau selon la revendication 1, **caractérisé par le fait que** les vannes sont des vannes électromagnétiques, les éléments de réception d'eau étant reliés à l'entrée de la pompe à eau par l'intermédiaire des vannes électromagnétiques correspondantes, respectivement.

3. Système d'optimisation de qualité d'eau selon la revendication 1, **caractérisé par le fait que** le dispositif de purification d'eau comprend un filtre, un dispositif d'électrolyse d'eau, un dispositif d'osmose inverse (RO), un dispositif de filtre à charbon actif arrière RO et un dispositif de stérilisation aux ultraviolets.

4. Système d'optimisation de qualité d'eau selon la revendication 3, **caractérisé par le fait que** le filtre, le dispositif d'électrolyse d'eau, le dispositif d'osmose inverse (RO), le dispositif de filtre à charbon actif arrière RO et le dispositif de stérilisation aux ultraviolets sont reliés de manière séquentielle en série, le filtre est relié au dispositif de régulation de valeur de pH, et le dispositif de stérilisation aux ultraviolets est relié au dispositif de stockage d'eau.

5. Système d'optimisation de qualité d'eau selon la revendication 1, **caractérisé par le fait qu'**il comprend en outre un dispositif de magnétisation de l'eau, le dispositif de stockage d'eau étant relié à la sortie de système par l'intermédiaire du dispositif de magnétisation de l'eau.

6. Système d'optimisation de qualité d'eau selon la revendication 1, **caractérisé par le fait que** la source d'alimentation est une source d'alimentation solaire.
